# EUROPEAN PATENT SPECIFICATION

(11) **EP 1 092 857 B1**
(45) Date of publication and mention of the grant of the patent: **07.05.2003**
(21) Application number: 00122455.9
(22) Date of filing: 13.10.2000
(51) Int. Cl.: F02D 41/24

(54) **System for managing an electronic diesel engine control system**
Vorrichtung zum Management des Steuersystems einer Selbstgezündeten Brennkaftmaschine
Appareil pour piloter le système de contrôle d'un moteur diesel

(30) Priority: 15.10.1999 IT TO990900
(43) Date of publication of application: 18.04.2001
(73) Proprietor: IVECO FIAT S.p.A., 10156 Torino (IT)
(72) Inventor: Maule, Roberto, 10139 Torino (IT)
(74) Representative: Franzolin, Luigi

(56) References cited:
- EP-A- 0 059 586
- US-A- 5 065 328
- US-A- 5 189 621
- US-A- 5 268 842
- PATENT ABSTRACTS OF JAPAN vol. 009, no. 114 (M-380), 18 May 1985 (1985-05-18) & JP 60 001335 A (NISSAN JIDOSHA KK), 7 January 1985 (1985-01-07)

## Description

The present invention relates to an electronic system for managing a diesel engine.

As is known, diesel engines are provided with a fuel injection unit controlled by an electronic diesel control (EDC) system which receives a plurality of information signals as input (for instance correlated with the position of the accelerator pedal, the number of revolutions of the engine, etc.) and generates as output drive signals supplied to the injection unit in order to control the supply of a desired quantity of fuel.

The electronic control system is normally provided with a memory in which a map of the engine is permanently stored; this map is formed by a plurality of pairs of numerical data which express a predetermined relationship existing between the number of revolutions n of the engine and the torque Γ supplied by the engine itself. This map is used to generate the drive signals in response to the input signals.

The relationship expressed by the engine map is defined experimentally taking account of a plurality of factors including the engine performance, the engine consumption and the type of pollutant emissions that the engine emits. Generally, a map providing a compromise optimising the various above-mentioned factors is set. For particular situations of engine operation and in particular for certain types of route along which the vehicle is travelling, it may be the case, however, that the map being used is not at all appropriate.

Document EP A 0 059 586 discloses a diesel engine control system having a plurality of maps for different modes of engine operation that are selected on the basis of engine speed signal and throttle position signal.

The object of the present invention is to provide a system for managing an electronic diesel engine control system in which different maps can be selected automatically as a function of the characteristics of the route along which the vehicle is travelling such that the control system may automatically select and use the map most suited to each route.

This object is achieved by the present invention which relates to a system for managing an electronic diesel engine control system of the type described in claim 1.

The invention will now be described with reference to the accompanying drawings, which illustrate a nonlimiting embodiment thereof, and in which:
Fig. 1 shows, in diagram form, a vehicle in which a diesel engine is provided with an electronic engine control system in accordance with the present invention;
Fig. 2 is a block diagram of the operation of the system for managing the electronic engine control system of the present invention.

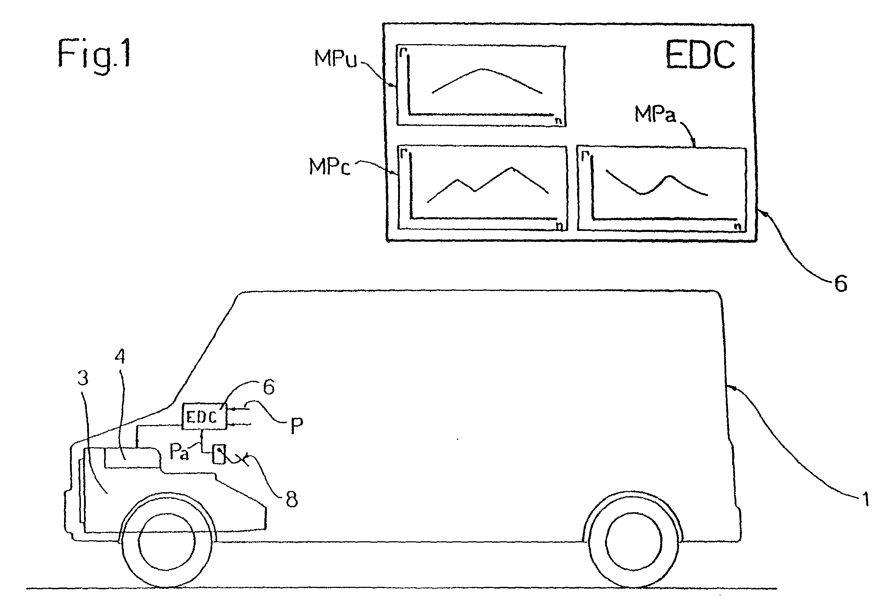

In Fig. 1, an industrial vehicle (shown in diagram form) is shown overall by 1, in which a diesel engine 3 is provided with a fuel injection unit 4 controlled by an electronic control system 6 (also known as EDC - Electronic Diesel Control). The EDC system 6 (of known type) receives a plurality of information signals P as input, and in particular receives as input a signal Pa correlated with the position of the accelerator pedal 8, and generates as output drive signals supplied to the injection unit 4 to control the supply of a desired quantity of fuel.

The electronic control system 6 is provided with memory units (not shown) in which a plurality of pairs of numerical data, which express the relationship existing between the number of revolutions n of the engine and the torque supplied by the engine, are stored. Overall, these pairs of numerical data are also known as the map MP of the engine as, in a Cartesian plan, they express the relationship (curve) existing between the speed of rotation of the engine and the torque supplied by the engine itself. The electronic control system 6 uses, in a known manner which is not therefore shown, the map MP in order to generate drive signals in response to the input signals.

According to the present invention, the electronic control system 6 is provided with different engine maps that can be selected as alternatives and are each adapted to a particular driving requirement of the vehicle.

The electronic system 6 is in particular provided with three engine maps:
- a first engine map Mpu (also known as the urban map) adapted for urban driving requirements;
- a second engine map MPc (also known as the hill map) adapted for requirements when driving between towns and/or in hilly areas;
- a third engine map Mpa (also known as the motorway map) adapted for motorway driving requirements.

The three different maps are produced in a known experimental manner by selecting a plurality of points which, for the type of route for which they are adapted, provide a relationship between the number of revolutions and torque that optimises vehicle consumption and performance and minimises emissions.

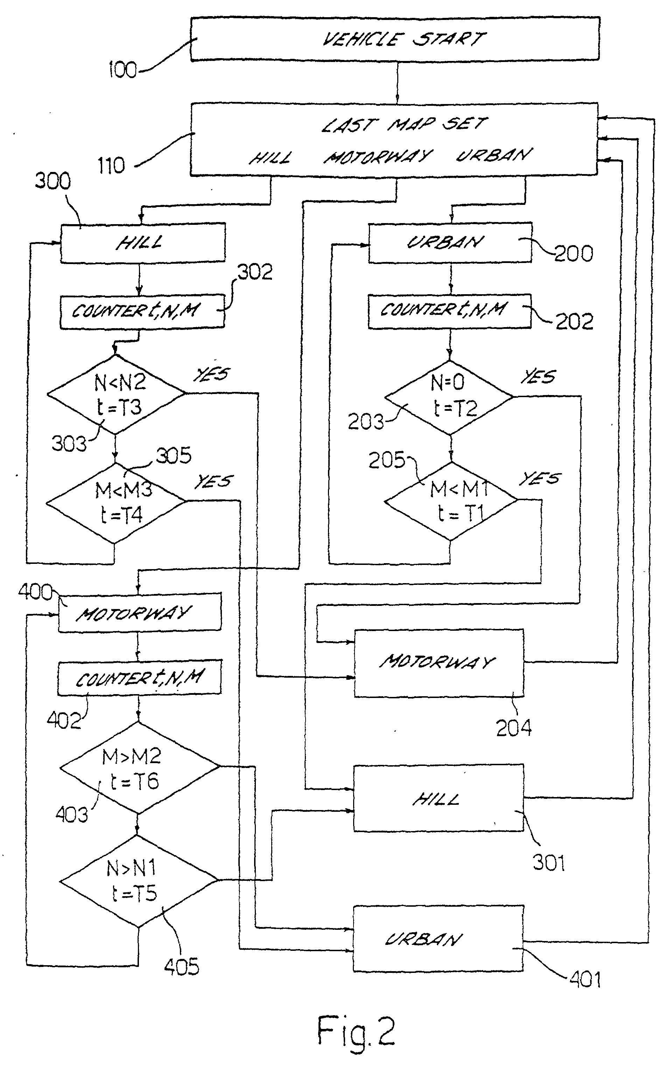

The three different maps are selected in a fully automatic manner by means of the operations described with reference to Fig. 2.

A block 100 is initially reached while awaiting the departure of the vehicle 1; this operation can be carried out by detecting the speed v of the vehicle, for instance by monitoring a signal detected by a sensor (not shown) coupled to the gear change (not shown) of the vehicle 1.

When a positive speed (v > 0) is detected, the block 100 is followed by a block 110 that detects the last map used during the previous operation of the engine.

The block 110 selects a block 200, 300 or 400 when the last map used was respectively the urban map, the hill map or the motorway map.

The block 200 continues the use of the urban map used during the previous operation of the engine and is followed by a block 202 which carries out the following operations:
- a counter which counts a time t is actuated;
- the speed v of the vehicle is detected and is compared with two initial threshold values (limit speeds Vmax1 and Vmin1) which define the limits of a first speed band - when the instantaneous speed of the vehicle leaves the above-mentioned band, the content N of a counter which represents a number of transients of motorway type is increased unitarily (+1) ;
- the actuation of the pedal (not shown) of the vehicle is detected and for each actuation of the brake, the content N of the counter representing the transients of motorway type is increased unitarily.

The subsequent actuations of the brake generate an increment of the counter which represents the transients of motorway type only if these actuations are spaced from one another by a predetermined time interval (for instance at least 10 seconds).

The block 202 is further adapted to compare the speed of the vehicle with two second threshold values (limit speeds Vmax2 and Vmin2) which define the limits of a second speed band - when the instantaneous value of the speed leaves the above-mentioned second band, the content M of a counter which represents the number of transients of urban type is increased unitarily. Similarly to what has been described above, the actuation of the brake pedal is detected and for each actuation of the brake, the content M of the counter which represents the transients of urban type is increased unitarily.

The subsequent actuations of the brake generate an increment of the counter which represents the transients of urban type only if these actuations are spaced from one another by a predetermined time interval (for instance at least 10 seconds).

The block 202 is followed by a block 203 which checks whether, within a time period t = T2, the number N of motorway transients is equal to zero; if the result is positive (i.e. no motorway transients within the time T2), the block 203 is followed by a block 204 which controls the use of the motorway engine map and is in turn followed by the block 110.

When the result of the comparison carried out by the block 203 is negative, the block 203 is followed by a block 205 which checks whether, within a time period t = T1, the number M of urban transients is lower than a threshold M1; if the result is positive (i.e. the number of urban transients is lower than M1 in the time period T1), the block 205 is followed by a block 301 which controls the use of the engine map of hill type and is followed in turn by the block 110. When the result of the comparison carried out by the block 205 is negative, there is a return to the block 200.

The block 300 continues the use of the hill engine map in use during the previous operation of the engine and is followed by a block 302 which carries out the following operations:
- a counter which counts a time t is actuated;
- the number N of transients of motorway type is detected (similarly to the description of the block 202);
- the number M of transients of urban type is detected (similarly to the description of the block 202).
The block 302 is followed by a block 303 which checks whether, within a period of time t = T3, the number N of motorway transients is lower than a predetermined threshold N2; if the result is positive, the block 303 is followed by the block 204 which controls the use of the motorway engine map, otherwise the block 303 is followed by a block 305.

The block 305 checks whether, within a period of time t = T4, the number M of urban transients is lower than a threshold M3; if the result is positive (i.e. the number of urban transients is lower than M3 in the time T4), the block 305 is followed by a block 401 which controls the use of the urban engine map and is followed in turn by the block 110. When the result of the comparison carried out by the block 305 is negative, there is a return to the block 300.

The block 400 continues the use of the urban engine map in use during the previous operation of the engine and is followed by a block 402 which carries out the following operations:
- a counter which counts a time t is actuated;
- the number N of transients of motorway type is detected (similarly to the description of the blocks 202 and 302);
- the number M of transients of urban type is detected (similarly to the description of the blocks 202 and 302).
The block 402 is followed by a block 403 which checks whether, within a period of time t = T6, the number M of urban transients is greater than a predetermined threshold M2; if the result is positive, the block 403 is followed by the block 401 which controls the use of the urban engine map, otherwise the block 403 is followed by a block 405.

The block 405 checks whether, within a period of time t = T5, the number N of motorway transients is greater than a threshold N1; if the result is positive (i.e. the number of motorway transients is greater than N1 in the time T5), the block 405 is followed by the block 301 which controls the use of the hill engine map. When the result of the comparison carried out by the block 405 is negative, there is a return from the block 405 to the block 400.

The counter which stores the time t is zero-set at the input of one of the blocks 204, 301 and 401 (i.e. following a change of map).

Similarly, the counters that represent the number of motorway and urban transients N and M are also zero-set.

The values of T1-T6, M1, M2, M3, N1, N2 are determined experimentally.

According to the present invention, each engine map is selected by measuring magnitudes (in this case the speed of the vehicle) and controls (the actuation of the brake) that are representative of a type of route and thus make it possible to detect the type of route along which the vehicle is travelling; this ensures that, for a large number of types of route along which the vehicle is travelling, the map used is the most appropriate for the route. This improves the performance of the engine, reduces consumption and means that pollutant emissions are always kept within the limits laid down by law.

## Claims

1. An electronic system for managing a diesel engine (3), this system being provided with a plurality of different engine maps (MPu, MPc, MPa) that can be selected as alternatives and are each adapted to a particular driving requirement of the vehicle,
**characterised in that** it comprises:
- means for detecting transients of motorway type (202, 302, 402) adapted to monitor magnitudes (v) and controls of the vehicle representative of a type of route in order to detect a number (N) of transients of motorway type;
- means for detecting transients of urban type (202, 302, 402) adapted to monitor magnitudes (v) and controls of the vehicle representative of a type of route in order to detect a number (M) of transients of urban type;
- comparison means (203, 205, 303, 305, 403, 405) adapted to compare at least one of the number N of transients of motorway type and of the number M of transients of urban type in order to select one of the maps; the means for detecting transients of urban type (202, 302, 402) are adapted to detect the speed (v) of the vehicle in order to compare this speed with threshold values (Vmax2 and Vmin2) that define the limits of a speed band; when the instantaneous speed of the vehicle assumes a predetermined relationship with respect to this band, and in particular leaves this band, the number (M) of transients of urban type is increased unitarily (+1) ;
the means for detecting transients of urban type (202, 302, 402) being further adapted to detect the actuation of the brake of the vehicle in order to increase the number (M) of transients of urban type unitarily (+1).

2. An electronic system as claimed in claim 1, **characterised in that** the means for detecting transients of urban type (202, 302, 402) are adapted to increase the number (M) of transients of urban type only if these actuations of the brake are spaced from one another by a predetermined time interval.

3. An electronic system as claimed in claim 1, **characterised in that** the means for detecting transients of motorway type (202, 302, 402) are adapted to detect the speed (v) of the vehicle in order to compare this speed with threshold values (Vmax1 and Vmin1) that define the limits of a speed band; when the instantaneous speed of the vehicle assumes a predetermined relationship with respect to this band, and in particular leaves this band, the number (N) of transients of motorway type is increased unitarily (+1);
the means for detecting transients of motorway type (202, 302, 402) being further adapted to detect the actuation of the brake of the vehicle in order to increase the number (N) of transients of motorway type unitarily (+1).

4. An electronic system as claimed in claim 3, **characterised in that** the means for detecting transients of motorway type (202, 302, 402) are adapted to increase the number (N) of transients of motorway type only if these actuations of the brake are spaced from one another by a predetermined time interval.

5. An electronic system as claimed in any one of the preceding claims, **characterised in that** the engine maps comprise:
- a first urban engine map (MPu) adapted to the requirements of urban driving;
- a second hill engine map (MPc) adapted to the requirements of driving between towns and/or in hilly areas;
- a third motorway engine map (Mpa) adapted to the requirements of motorway driving.

6. An electronic system as claimed in claim 5, **characterised in that** the comparison means comprise:
first comparison means (203) that can be selected following a previous use (110) of the map of urban type (200) and are adapted to check whether, within a first period of time (t = T2), the number (N) of motorway transients is equal to a first threshold (zero); if the check by the first comparison means (203) is positive, they control the use of the motorway engine map;
if the result of the check by these first comparison means (203) is negative, they select second comparison means (205) that check whether, within a second period of time (t = T1), the number (M) of urban transients is lower than a second threshold (M1); if the result of the check by these second comparison means (205) is positive, they control the use of the hill engine map.

7. An electronic system as claimed in claim 5, **characterised in that** the comparison means comprise:
third comparison means (303) that can be selected following a previous use (110) of the map of hill type (300) and are adapted to check whether, within a third period of time (t = T3), the number (N) of motorway transients is lower than a third threshold (N2); if the result of the check by the third comparison means (303) is positive, they control the use of the motorway engine map;
if the result of the check by these third comparison means (303) is negative, they select fourth comparison means (305) that check whether, within a fourth period of time (t = T4), the number (M) of urban transients is lower than a fourth threshold (M3); if the result of the check by these fourth comparison means (305) is positive, they control the use of the urban engine map.

8. An electronic system as claimed in claim 5, **characterised in that** the comparison means comprise:
fifth comparison means (403) that can be selected following a previous use (110) of the map of motorway type (400) and are adapted to check whether, within a fifth period of time (t = T6), the number (M) of urban transients is greater than a fifth threshold (M2); if the result of the check by the fifth comparison means (403) is positive, they control the use of the urban engine map;
if the result of the check by these fifth comparison means (403) is negative, they select sixth comparison means (405) that check whether, within a sixth period of time (t = T5), the number (N) of motorway transients is greater than a sixth threshold (N1); if the result of the check by these sixth comparison means (405) is positive, they control the use of the hill engine map.

## Patentansprüche

1. Elektronisches System zum Steuern eines Dieselmotors (3), wobei dieses System mit einer Vielzahl von verschiedenen Motortafeln (MPu, MPc, MPa) bereitgestellt ist, die als Alternativen ausgewählt werden können, wobei jede an eine besondere Fahranforderung des Fahrzeugs angepasst ist,
**dadurch gekennzeichnet, dass** es umfasst:
- eine Einrichtung zum Detektieren von Übergängen einer Schnellstraßen-Art (202, 302, 402), dazu angepasst, Größen (v) und Steuerungen des Fahrzeugs, repräsentativ für eine Art von Route, zu steuern, um eine Anzahl (N) von Übergängen einer Schnellstraßen-Art zu detektieren;
- eine Einrichtung zum Detektieren von Übergängen einer städtischen Art (202, 302, 402), dazu angepasst, Größen (v) und Steuerungen des Fahrzeugs, repräsentativ für einer Art von Route, zu überwachen, um eine Anzahl (M) von Übergängen einer städtischen Art zu detektieren;
- eine Vergleichseinrichtung (203, 205, 303, 305, 403, 405), dazu angepasst, wenigstens eine der Anzahl N von Übergängen einer Schnellstrassen-Art und die Anzahl M von Übergängen einer städtischen Art zu vergleichen, um eine der Tafeln auszuwählen;
wobei die Vorrichtung zum Detektieren von Übergängen einer städtischen Art (202, 302, 402) angepasst ist, die Geschwindigkeit (v) des Fahrzeugs zu detektieren, um diese Geschwindigkeit mit Schwellwerten (Vmax2 und Vmin2) zu vergleichen, die die Grenzen eines Geschwindigkeitsbereichs definieren; und, wenn die augenblickliche Geschwindigkeit des Fahrzeugs eine vorbestimmte Beziehung unter Berücksichtigen dieses Bereichs annimmt und insbesondere diesen Bereich verlässt, die Anzahl (M) von Übergängen einer städtischen Art um eine Einheit erhöht (+1) wird;
die Einrichtung zum Detektieren von Übergängen einer städtischen Art (202, 302, 402) weiterhin angepasst ist, das Betätigen der Bremse des Fahrzeuges zu detektieren, um die Anzahl (M) von Übergängen einer städtischen Art um eine Einheit zu erhöhen (+1).

2. Elektronisches System gemäß Anspruch 1, **dadurch gekennzeichnet, dass** die Einrichtung zum Detektieren von Übergängen einer städtischen Art (202, 302, 402) angepasst ist, die Anzahl (M) von Übergängen einer städtischen Art nur zu erhöhen, wenn diese Betätigungen der Bremse voneinander durch ein vorbestimmtes Zeitintervall unterbrochen sind.

3. Elektronisches System gemäß Anspruch 1, **dadurch gekennzeichnet, dass** die Einrichtung zum Detektieren von Übergängen einer Schnellstraßen-Art (202, 302, 402) angepasst ist, die Geschwindigkeit (v) des Fahrzeugs zu detektieren, um diese Geschwindigkeit mit Schwellwerten (Vmax1 und Vmin1) zu vergleichen, die die Grenzen eines Geschwindigkeitsbereichs definieren; und, wenn die augenblickliche Geschwindigkeit des Fahrzeugs eine vorbestimmte Beziehung unter Berücksichtigen dieses Bereichs annimmt und insbesondere diesen Bereich verlässt, die Anzahl (N) von Übergängen einer Schnellstraßen-Art um eine Einheit erhöht wird (+1) ;
die Einrichtung zum Detektieren von Übergängen einer Schnellstrassen-Art (202, 302, 402) weiterhin angepasst ist, das Betätigen der Bremse des Fahrzeugs zu detektieren, um die Anzahl (N) von Übergängen einer Schnellstraßen-Art um eine Einheit zu erhöhen (+1).

4. Elektronisches System gemäß Anspruch 3, **dadurch gekennzeichnet, dass** die Einrichtung zum Detektieren von Übergängen einer Schnellstraßen-Art (202, 302, 402) angepasst ist, die Anzahl (N) von Übergängen einer Schnellstraßenart nur zu erhöhen, wenn die Betätigungen der Bremse voneinander durch ein vorbestimmtes Zeitintervall unterbrochen sind.

5. Elektronisches System gemäß einem der vorhergehenden Ansprüche, **dadurch gekennzeichnet, dass** die Motortafeln umfassen:
- eine erste städtische Motortafel (MPu), die an die Anforderungen von städtischem Fahren angepasst ist;
- eine zweite Bergmotortafel (MPc), die an die Anforderungen von Fahren zwischen Städten und/oder in bergigen Gegenden angepasst ist;
- eine dritte Schnellstraßenmotortafel (Mpa), die an die Anforderungen von Schnellstraßen-Fahren angepasst ist.

6. Elektronisches System gemäß Anspruch 5, **dadurch gekennzeichnet, dass** die Vergleichseinrichtung umfasst:
eine erste Vergleichseinrichtung (203) die einem vorhergehenden Verwenden (110) der Tafel einer städtischen Art (200) folgend ausgewählt werden kann und angepasst ist, zu prüfen, ob innerhalb einer ersten Zeitdauer (t = T2) die Anzahl (N) von Schnellstraßenübergängen gleich einem ersten Schwellwert (null) ist; wobei, wenn das Prüfen durch die erste Vergleichseinrichtung (203) positiv ist, sie das Verwenden der Schnellstrassenmotortafel steuert;
wenn das Ergebnis des Prüfens durch diese ersten Vergleichseinrichtungen (203) negativ ist, sie eine zweite Vergleichseinrichtung (205) auswählt, die prüft, ob innerhalb einer zweiten Zeitdauer (t = T1) die Anzahl (M) von städtischen Übergängen kleiner als ein zweiter Schwellwert (M1) ist; und, wenn das Ergebnis des Prüfens durch diese zweite Vergleichseinrichtung (205) positiv ist, sie das Verwenden der Bergmotortafel steuert.

7. Elektronisches System gemäß Anspruch 5, **dadurch gekennzeichnet, dass** die Vergleichseinrichtung umfasst:
eine dritte Vergleichseinrichtung (303), die einem vorhergehenden Verwenden (110) der Tafel einer Bergart (300) folgend ausgewählt werden kann und angepasst ist, zu prüfen, ob innerhalb einer dritten Zeitdauer (t = T3) die Anzahl (N) von Schnellstraßenübergängen niedriger als ein dritter Schwellwert (N2) ist; und, wenn das Ergebnis des Prüfens durch die dritte Vergleichseinrichtung (303) positiv ist, sie das Verwenden von der Schnellstraßenmotortafel steuert;
wenn das Ergebnis des Prüfens durch diese dritte Vergleichseinrichtung (303) negativ ist, sie eine vierte Vergleichseinrichtung (305) auswählt, die prüft, ob innerhalb einer vierten Zeitdauer (t = T4) die Anzahl (M) von städtischen Übergängen niedriger als ein vierter Schwellwert (M3) ist; und, wenn das Ergebnis des Prüfens durch diese vierte Vergleichseinrichtung (305) positiv ist, sie das Verwenden der städtischen Motortafel steuert.

8. Elektronisches System gemäß Anspruch 5, **dadurch gekennzeichnet, dass** die Vergleichseinrichtung umfasst:
eine fünfte Vergleichseinrichtung (403), die einem vorhergehenden Verwenden (110) der Tafel einer Schnellstraßen-Art (400) folgend ausgewählt werden kann und angepasst ist, zu prüfen, ob innerhalb einer fünften Zeitdauer (t = T6) die Anzahl (M) von städtischen Übergängen größer als ein fünfter Schwellwert (M2) ist; wobei, wenn das Ergebnis des Prüfens durch die fünfte Vergleichseinrichtung (403) positiv ist, sie das Verwenden der städtischen Motortafel steuert;
wenn das Ergebnis des Prüfens durch diese fünfte Vergleichseinrichtung (403) negativ ist, sie eine sechste Vergleichseinrichtung (405) auswählt, die prüft, ob innerhalb einer sechsten Zeitdauer (t = T5) die Anzahl (N) von Schnellstraßenübergängen größer als ein sechster Schwellwert (N1) ist; und, wenn das Ergebnis des Prüfens durch diese sechste Vergleichseinrichtung (405) positiv ist, sie die Verwendungstafel steuert.

## Revendications

1. Système électronique pour piloter un moteur diesel (3), ce système étant pourvu d'une pluralité de différentes cartes moteur (Mpu, MPc, Mpa), qui peuvent être sélectionnées comme variantes et qui sont chacune adaptées à un impératif particulier de conduite du véhicule,
**caractérisé en ce qu'**il comprend:
- des moyens pour détecter des phénomènes transitoires du type autoroute (202, 302, 402) adaptés pour contrôler des grandeurs (v) et des commandes du véhicule représentatives d'un type de parcours de façon à détecter un certain nombre (N) de phénomènes transitoires du type autoroute ;
- des moyens pour détecter des phénomènes transitoires de type urbain (202, 302, 402) adaptés pour contrôler des grandeurs (v) et des commandes du véhicule représentatives d'un type de parcours de façon à détecter un nombre (M) de phénomènes transitoires du type urbain ;
- des moyens de comparaison (203, 205, 303, 305, 403, 405) adaptés pour comparer au moins l'un du nombre N de phénomènes transitoires du type autoroute et du nombre M de phénomènes transitoires du type urbain afin de sélectionner l'une des cartes ; les moyens pour détecter les phénomènes transitoires du type urbain (202, 302 ; 402) sont adaptés pour détecter la vitesse (v) du véhicule de façon à comparer cette vitesse à des valeurs de seuils (Vmax2 et Vmin2) qui définissent les limites d'une bande de vitesses ;quand la vitesse instantanée du véhicule présente une relation prédéterminée par rapport à cette bande, et en particulier quitte cette bande, le nombre (M) de phénomènes transitoires du type urbain est augmenté d'une unité (+1);
- les moyens pour détecter les phénomènes transitoires de type urbain (202, 302, 402) étant de plus adaptés pour détecter l'actionnement du frein du véhicule de façon à augmenter d'une unité (+1) le nombre (M) des phénomènes transitoires du type urbain.

2. Système électronique selon la revendication 1 **caractérisé en ce que** les moyens pour la détection de phénomènes transitoires de type urbain (202, 302, 402) sont adaptés pour augmenter le nombre (M) de phénomènes transitoires de type urbain seulement si ces actionnements du frein sont espacés l'un de l'autre d'un intervalle de temps prédéterminé.

3. Système électronique selon la revendication 1 **caractérisé en ce que** les moyens pour détecter des phénomènes transitoires de type autoroute (202, 302, 402) sont adaptés pour détecter la vitesse (v) du véhicule de façon à comparer cette vitesse à des valeurs de seuils (Vmax1 et Vmin1) qui définissent les limites d'une bande de vitesses ; quand la vitesse instantanée du véhicule satisfait à une relation prédéterminée par rapport à cette bande, et en particulier quitte cette bande, le nombre (N) de phénomènes transitoires du type autoroute est augmenté d'une unité (+1) ;
les moyens pour détecter les phénomènes transitoires du type autoroute (202, 302, 402) étant de plus adaptés pour détecter l'actionnement du frein du véhicule de façon à augmenter d'une unité (+1) le nombre (N) de phénomènes transitoires du type autoroute.

4. Système électronique selon la revendication 3 **caractérisé en ce que** les moyens pour détecter les phénomènes transitoires du type autoroute (202, 302, 402) sont adaptés pour augmenter le nombre (N) de phénomènes transitoires du type autoroute seulement si ces actionnements du frein sont espacés l'un de l'autre d'un intervalle de temps prédéterminé.

5. Système électronique selon l'une quelconque des revendications précédentes **caractérisé en ce que** les cartes moteur comprennent :
- une première carte moteur urbaine (MPu) adaptée aux impératifs de la conduite urbaine ;
- une seconde carte moteur pour parcours vallonné (MPc) adaptée aux impératifs de la conduite entre des villes et/ou dans des zones vallonnées ;
- une troisième carte moteur pour autoroute (Mpa) adaptée aux impératifs de la conduite sur autoroute.

6. Système électronique selon la revendication 5 **caractérisé en ce que** les moyens de comparaison comportent :
- des premiers moyens de comparaison (203) qui peuvent être sélectionnés après une utilisation antérieure (110) de la carte du type urbain (200) et qui sont adaptés pour vérifier si dans une première période de temps (t= T2), le nombre (N) de phénomènes transitoires d'autoroute est égal à un premier seuil (zéro) ; si la vérification par les premiers moyens de comparaison (203) est positive, ceux-ci commandent l'utilisation de la carte moteur pour autoroute ;
- si le résultat de la vérification par ces premiers moyens de comparaison (203) est négatif, ils sélectionnent des seconds moyens de comparaison (205) qui vérifient si dans une seconde période de temps (t= T1) le nombre (M) de phénomènes transitoires urbains est inférieur à un second seuil (M1) ; si le résultat de la vérification par ces seconds moyens de comparaison (205) est positif, ceux-ci commandent l'utilisation de la carte moteur pour parcours vallonné.

7. Système électronique selon la revendication 5 **caractérisé en ce que** les moyens de comparaison comprennent :
des troisièmes moyens de comparaison (303) qui peuvent être sélectionnés après une utilisation antérieure (110) de la carte du type parcours vallonné (300) et qui sont adaptés pour vérifier si dans une troisième période de temps (t= T3), le nombre (N) de phénomènes transitoires d'autoroute est inférieur à un troisième seuil (N2) ; si le résultat de la vérification par les troisièmes moyens de comparaison (303) est positif, ceux- ci commandent l'utilisation de la carte moteur pour autoroute ;
si le résultat de la vérification par ces troisièmes moyens de comparaison (303) est négatif, ceux-ci sélectionnent des quatrièmes moyens de comparaison (305) qui vérifient si dans une quatrième période de temps (t= T4) le nombre (M) de phénomènes transitoires urbains est inférieur à un quatrième seuil (M3); si le résultat de la vérification par ces quatrièmes moyens de comparaison (305) est positif, ceux-ci commandent l'utilisation de la carte moteur urbaine.

8. Système électronique selon la revendication 5 **caractérisé en ce que** les moyens de comparaison comprennent :
des cinquièmes moyens de comparaison (403) qui peuvent être sélectionnés après une première utilisation (110) de la carte du type autoroute (400) et qui sont adaptés pour vérifier si dans une cinquième période de temps (t= T6) le nombre (M) de phénomènes transitoires urbains est supérieur à un cinquième seuil (M2) ; si le résultat de la vérification par les cinquièmes moyens de comparaison (403) est positif, ceux-ci commandent l'utilisation de la carte moteur urbaine ;
si le résultat de la vérification par ces cinquièmes moyens de comparaison (403) est négatif ; ils sélectionnent des sixièmes moyens de comparaison (405) qui vérifient si dans une sixième période de temps (t= T5), le nombre (N) de phénomènes transitoires d'autoroute est supérieur à un sixième seuil (N1) ; si le résultat de la vérification par ces sixièmes moyens de comparaison (405) est négatif, ceux-ci commandent l'utilisation de la carte moteur pour parcours vallonné.
